# NEUE EUROPÄISCHE PATENTSCHRIFT

(11) **EP 2 687 923 B2**
(45) Veröffentlichungstag und Bekanntmachung des Hinweises auf die Entscheidung über den Einspruch: **03.05.2023**
(45) Hinweis auf die Patenterteilung: 05.08.2020
(21) Anmeldenummer: 13172039.3
(22) Anmeldetag: 14.06.2013
(51) Int. Cl.: G05B 13/02, A01D 41/127

(54) **Fahrerassistenzsystem für landwirtschaftliche Arbeitsmaschine**
Driver assistance system for agricultural vehicle
Système d'assistance du conducteur pour machine de travail agricole

(30) Priorität: 16.07.2012 DE 102012106390; 13.06.2013 DE 102013106131
(43) Veröffentlichungstag der Anmeldung: 22.01.2014
(73) Patentinhaber: CLAAS Selbstfahrende Erntemaschinen GmbH, 33428 Harsewinkel (DE)
(72) Erfinder: Wilken, Andreas, 49143 Bissendorf (DE); Neu, Sebastian, 49196 Bad Laer (DE); Heitmann, Christoph, 48231 Warendorf (DE); Baumgarten, Joachim, 48361 Beelen (DE); Bussmann, Christoph, 33428 Harsewinkel (DE); Vöcking, Henner, 33397 Rietberg (DE); Kettelhoit, Boris, 33335 Gütersloh (DE)
(74) Vertreter: CLAAS Gruppe

(56) Entgegenhaltungen:
- EP-A1- 2 132 974
- EP-A1- 2 165 591
- EP-A1- 2 165 591
- EP-A2- 0 740 896
- EP-A2- 1 371 278
- DE-A1-102006 044 628
- DE-A1-102009 009 767
- DE-A1-102009 009 767
- DE-A1-102010 017 676
- DE-A1-102010 017 676

## Beschreibung

Die vorliegende Erfindung betrifft ein Fahrerassistenzsystem für eine landwirtschaftliche Arbeitsmaschinen mit zumindest einer Steuer- und Regeleinrichtung gemäß dem Oberbegriff des Anspruches 1.

Aus dem Stand der Technik ist es bekannt Arbeits- und Qualitätsparameter einer landwirtschaftlichen Arbeitsmaschine mittels einer Steuer- und Regeleinrichtung zu überwachen und zu optimieren. Die DE 10 2006 044 628 schlägt hierfür ein Verfahren vor, bei dem stets eine bestimmte Anzahl von Parametern in Abhängigkeit voneinander optimiert werden. Diese punktuelle Regelung von Maschinenparametern wird unter anderem in der DE 10 2009 009 767 dahingehend weiterentwickelt, dass ereignisabhängig eine Optimierung einstellbarer Maschinenparameter vorgenommen wird, wobei der Bediener der landwirtschaftlichen Arbeitsmaschine mittels einer Anzeigeeinheit stets über die ablaufenden Optimierungsvorgänge informiert gehalten wird. Aufgrund dessen, dass derartige Systeme sehr präzise die Arbeits- und Qualitätsparameter einer landwirtschaftlichen Arbeitsmaschine optimieren können ist aus der DE 10 2010 017 676 ein Regelungssystem bekannt geworden, welches die Auswahl einer geeigneten Prozessführungsstrategie an den Verwendungszweck des Erntegutes koppelt. Auf diese Weise wird sichergesellt, dass die Optimierung der Arbeits- und Qualitätsparameter nur so genau wie notwendig und nicht so genau wie möglich betrieben wird. Dies reduziert einerseits den Regelungsaufwand und stellt andererseits sicher, dass in Abhängigkeit von den jeweiligen Qualitätskriterien pro Zeiteinheit ein maximaler Erntegutdurchsatz realisierbar ist.

EP 2 132 974 offenbart eine landwirtschaftliche Erntemaschine, wobei in einer Speicher- und Auswerteeinrichtung wenigstens ein Sollkriterium hinterlegt ist und anhand zumindest eines im Ernteprozess ermittelten Erntegut- und/oder Betriebsparameters und dem wenigstens einen Sollkriterium eine Prognose über die Erreichbarkeit eines Ist-Erntezieles abgeleitet wird und wobei die Prognose bei der Anpassung von Betriebsparametern berücksichtigt wird.

Diese bekannten Optimierungsmethoden gelangen dann an ihre Grenzen, wenn innerhalb einer gewählten Strategie ein zufriedenstellendes Ergebnis nicht erzielt werden kann. Dies ist häufig dann der Fall, wenn die Eigenschaften des zu erntenden Gutes stark von üblicherweise zu erwartenden Ernteguteigenschaften abweichen oder die Beschaffenheit des zu bearbeitenden Territoriums, wie etwa hängiges Gelände, die Arbeitsweise der Arbeitsorgane negativ beeinflusst.

Aufgabe der vorliegenden Erfindung ist es daher, die Steuer- und Regeleinrichtung einer landwirtschaftlichen Arbeitsmaschine derart weiterzuentwickeln, dass eine qualitativ hochwertige Regelung der landwirtschaftlichen Arbeitsmaschine möglich wird.

Diese Aufgabe wird erfindungsgemäß durch die kennzeichnenden Merkmale des unabhängigen Anspruches 1 gelöst.

Indem das Fahrerassistenzsystem für eine landwirtschaftliche Arbeitsmaschine mit zumindest einer Steuer- und Regeleinrichtung, die mittels in ihr hinterlegter Kennlinienfelder zu einer automatisierbaren Einstellung und Überwachung von Arbeits- und/oder Qualitätsparametern der landwirtschaftlichen Arbeitsmaschine eingerichtet ist und das durch Vorgabe einer auswählbaren Prozessführungsstrategie eine automatisierte Überwachung und/oder Einstellung zumindest eines Arbeits- und/oder Qualitätsparameters der landwirtschaftlichen Arbeitsmaschine erfolgt, wobei das Fahrerassistenzsystem zumindest dann einen Wechsel der Prozessführungsstrategie vorschlägt, wenn der vorgegebene Sollwert eines oder mehrerer Qualitätsparameter innerhalb der vorausgewählten Prozessführungsstrategie nicht erreichbar ist, wird sichergestellt, dass eine qualitativ hochwertige Regelung der landwirtschaftlichen Arbeitsmaschine möglich wird.

In vorteilhafter Ausgestaltung der Erfindung wird die Qualität des Regelungsergebnisses auch dadurch noch verbessert, wenn das Fahrerassistenzsystem zudem einen Wechsel der Prozessführungsstrategie vorschlägt, wenn für einen oder mehrere der Qualitätsparameter noch günstigere als durch den vorgegebenen Sollwert definierte Werte erreichbar sind.

Eine besonders effektive Optimierung der Qualitätsparameter einer landwirtschaftlichen Arbeitsmaschine ergibt sich gemäß einer weiteren vorteilhaften Ausgestaltung der Erfindung dadurch, dass eine wiederholte Interaktion des Bedieners mit dem Fahrerassistenzsystem zur Optimierung desselben Arbeits- und/oder Qualitätsparameters das Fahrerassistenzsystem veranlasst, einen Wechsel der Prozessführungsstrategie vorzuschlagen.

Eine für den Bediener leicht verständliche Kommunikation mit dem Fahrerassistenzsystem ergibt sich in einer vorteilhaften Ausgestaltung der Erfindung dann, wenn die Kommunikation mit dem Fahrerassistenzsystem natürlichsprachig erfolgt.

Die von dem Fahrerassistenzsystem bewirkte Optimierung der Arbeitsweise der landwirtschaftlichen Arbeitsmaschine ist zudem dann besonders effektvoll, wenn in einer vorteilhaften Weiterbildung der Erfindung die auswählbaren Prozessführungsstrategien zumindest die Prozessführungsstrategien "maximaler Durchsatz", "minimaler Kraftstoffeinsatz", "hohe Druschqualität" und "Ausgeglichen" umfassen.

Um den Bediener der landwirtschaftlichen Arbeitsmaschine stets über die Auswirkungen der von dem Fahrerassistenzsystem bewirkten Optimierung informiert zu halten, ist in einer vorteilhaften Ausgestaltung der Erfindung zudem vorgesehen, dass die aus einem Wechsel der Prozessführungsstrategie resultierenden Auswirkungen auf die Arbeitsweise der Erntemaschine im Display des Fahrerassistenzsystems natürlichsprachig eingeblendet werden. Analoge Effekte werden erzielt, wenn gemäß einer weiteren Ausgestaltungsvariante eine Beschreibung der vorgeschlagenen Prozessführungsstrategie auf dem Display des Fahrerassistenzsystems natürlichsprachig darstellbar ist.

Eine komplexe Optimierung der landwirtschaftlichen Arbeitsmaschine wird in vorteilhafter Weiterbildung der Erfindung dann erreicht, wenn die Arbeitsparameter Maschinenparametereinstellungen und Erntegutparameter und die Qualitätsparameter die Parameter "Abscheideverlust", "Reinigungsverlust", "Überkehr", "Überkehrvolumen" und "Kornanteil in der Überkehr" umfassen.

Einen schnellen Überblick über den Aktivierungszustand der verfügbaren Einstellautomaten erhält der Bediener der landwirtschaftlichen Arbeitsmaschine zudem dann, wenn zumindest die die Qualitätskriterien beschreibenden Kennlinienfelder in Einstellautomaten hinterlegt sind und wobei jeder Einstellautomat in der Anzeigeeinheit mittels Piktogramm visualisiert ist und die Aktivierung eines Einstellautomaten durch Hervorhebung des jeweiligen Piktogramms und die Deaktivierung des jeweiligen Einstellautomaten durch Abblendung des jeweiligen Piktogramms visualisiert wird.

Damit stets sichergestellt ist, dass die landwirtschaftliche Arbeitsmaschine die verfügbaren Einstellressourcen optimal nutzt, kann zudem vorgesehen sein, dass die Steuer- und Regeleinrichtung automatisch mit der Inbetriebnahme der Arbeitsmaschine aktiviert wird.

Weitere vorteilhafte Ausgestaltungen der Erfindungen sind den Unteransprüchen zu entnehmen und werden nachfolgend anhand von in Zeichnungen dargestellten Ausführungsbeispielen näher erläutert.

Es zeigen:
- Fig. 1: eine schematische Darstellung einer als Mähdrescher ausgeführten landwirtschaftlichen Arbeitsmaschine;
- Fig. 2: eine schematische Darstellung einer Anzeigestruktur einer Steuer- und Regelungseinrichtung;
- Fig. 3a - 3d: schematische Darstellungen der Anzeigestruktur der Steuer- und Regelungseinrichtung in unterschiedlichen Betriebssituationen;
- Figur 4: eine schematische Darstellung des erfindungsgemäßen Fahrerassistenzsystems;
- Figur 5: verschiedene Betriebszustände des erfindungsgemäßen Fahrerassistenzsystems.

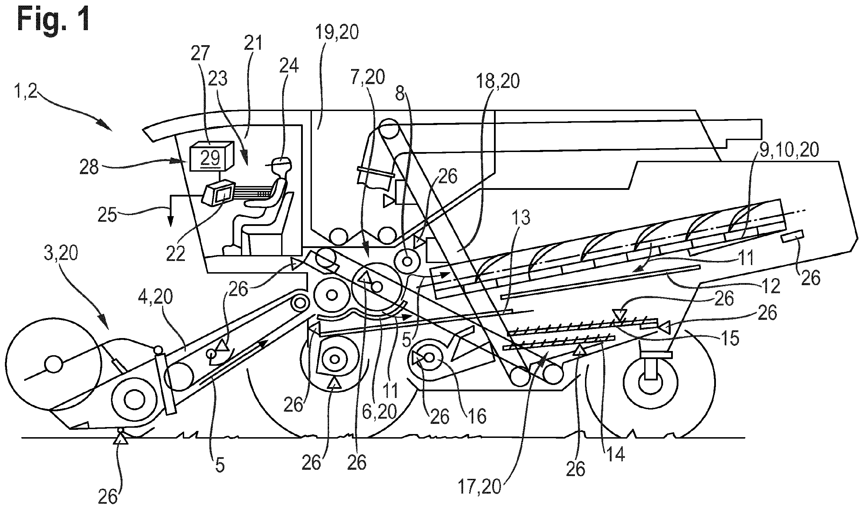

Die in Fig. 1 schematisch dargestellte, als Mähdrescher 2 ausgeführte landwirtschaftliche Arbeitsmaschine 1 nimmt in ihrem frontseitigen Bereich ein Getreideschneidwerk 3 auf, welches in an sich bekannter Weise mit dem Schrägförderer 4 des Mähdreschers 2 verbunden ist. Der den Schrägförderer 4 durchlaufende Erntegutstrom 5 wird in dem obenseitigen, rückwärtigen Bereich des Schrägförderers 4 an die untenseitig zumindest teilweise von einem sogenannten Dreschkorb 6 ummantelten Dreschorgane 7 des Mähdreschers 2 übergeben. Eine den Dreschorganen 7 nachgeordnete Umlenktrommel 8 lenkt den im rückwärtigen Bereich der Dreschorgane 7 aus diesen austretenden Gutstrom 5 so um, dass er unmittelbar an eine als Trennrotor 9 ausgeführte Trenneinrichtung 10 übergeben wird. In dem rotierenden Trennrotor 9 wird der Gutstrom 5 so gefördert, dass in dem Gutstrom 5 enthaltene freibewegliche Körner 11 im untenseitigen Bereich des Trennrotors 9 abgeschieden werden. Es liegt im Rahmen der Erfindung, dass die im dargestellten Ausführungsbeispiel als Trennrotor 9 ausgeführte Trenneinrichtung 10 auch als an sich bekannter und daher nicht dargestellter Hordenschüttler ausgeführt sein kann. Sowohl die am Dreschkorb 6 als auch am Trennrotor 9 abgeschiedenen Körner 11 werden über Rücklaufboden 12 und Zuführboden 13 einer aus mehreren Siebebenen 14, 15 und einem Gebläse 16 bestehenden Reinigungseinrichtung 17 zugeführt. Der gereinigte Körnerstrom wird schließlich mittels Elevatoren 18 an einen Korntank 19 übergeben. Im Folgenden werden das Getreideschneidwerk 3, der Schrägförderer 4, die Dreschorgane 7 und der ihnen zugeordnete Dreschkorb 6, die Trenneinrichtung 10, die Reinigungseinrichtung 17, die Elevatoren 18 und der Korntank 19 als Arbeitsorgane 20 der landwirtschaftlichen Arbeitsmaschine 1 bezeichnet.

Weiter verfügt die landwirtschaftliche Arbeitsmaschine 1 über eine Fahrzeugkabine 21 in der zumindest eine mit einer Anzeigeeinheit 22 versehene Steuer- und Regeleinrichtung 23 angeordnet ist, mittels derer automatisch oder vom Bediener 24 der landwirtschaftlichen Arbeitsmaschine 1 initiiert eine Vielzahl von an sich bekannten und daher nicht näher erläuterten Prozessen gesteuert werden können. Die Steuer- und Regeleinrichtung 23 kommuniziert über ein sogenanntes Bussystem 25 in an sich bekannter Weise mit einer Vielzahl von Sensorsystemen 26. Einzelheiten bezüglich der Struktur der Sensorsysteme 26 sind detailliert in der DE 101 47 733 beschrieben sodass im Folgenden die Struktur der Sensorsysteme 26 nicht nochmals beschrieben wird. Zudem ist die Steuer- und Regeleinrichtung 23 mit einem eine Anzeigeeinheit 27 umfassenden Fahrerassistenzsystem 28 gekoppelt. Es liegt im Rahmen der Erfindung, dass das Fahrerassistenzsystem 28 auch unmittelbar in die Steuer- und Regeleinrichtung 23 integriert sein kann und die Visualisierung der von dem Fahrerassistenzsystem 28 bereitgestellten und nachfolgend noch näher erläuterten Informationen 29 auch unmittelbar in dem der Steuer- und Regeleinrichtung 23 zugeordneten Anzeigeeinheit 22 erfolgt.

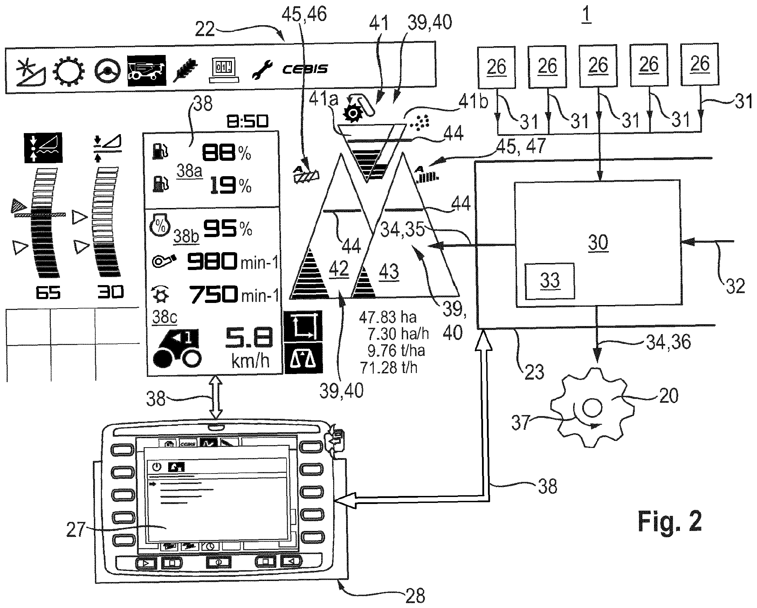

Fig. 2 zeigt eine schematische Darstellung der Anzeigeeinheit 22 der Steuer- und Regeleinrichtung 23 sowie die der Steuer- und Regeleinrichtung 23 zugeordnete und mit der Anzeigeeinheit 22 gekoppelte Recheneinheit 30. Die Recheneinheit 30 ist so beschaffen, dass sie neben den von den Sensorsystemen 26 generierten internen Informationen 31, externe Informationen 32 und in der Recheneinheit 30 selbst hinterlegte Informationen 33, wie etwa Expertenwissen, zu einer Vielzahl von Ausgangssignalen 34 verarbeiten kann. Die Ausgangssignale 34 sind dabei so beschaffen, dass sie zumindest Anzeigesteuersignale 35 und Arbeitsorgansteuersignale 36 umfassen, wobei erstere die Inhalte der Anzeigeeinheit 22 bestimmen und letztere die Änderung der unterschiedlichsten Arbeitsparameter 37 der Arbeitsorgane 20 der landwirtschaftlichen Arbeitsmaschine 1 bewirken, wobei Pfeil 37 symbolisch für die Dreschtrommeldrehzahl steht. Zudem ist die Steuer- und Regeleinrichtung 23, wie bereits beschrieben, mit einem Fahrerassistenzsystem 28 gekoppelt, wobei das Fahrerassistenzsystem 28 so in die landwirtschaftliche Arbeitsmaschine 1 integriert ist, dass es Daten 38 in noch näher zu beschreibender Weise sowohl mit der Steuer- und Regeleinrichtung 23 als auch mit der dieser zugeordneten Anzeigeeinheit 22 austauschen kann. Die in Figur 2 dargestellten Inhalte der Anzeigeeinheiten 22, 27 sind beispielhaft und werden nachfolgend näher beschrieben. Die der Steuer- und Regeleinrichtung 23 zugeordnete Anzeigeeinheit 22 umfasst in ihrem zentralen Bereich ein vom Bediener 24 frei definierbares sogenanntes Hotkey-Fenster 38 in welchem wichtige Maschineninformationen, wie etwa der Füllstand des Kraftstofftanks 38a, Maschinenparametereinstellungen 38b und die Fahrgeschwindigkeit 38c visualisiert sind.

Die Anzeigeeinheit 22 umfasst in ihrem rechtsseitigen Bereich Anzeigeelemente 39 zur Visualisierung aktueller Werte bestimmter Qualitätsparameter 40 der landwirtschaftlichen Arbeitsmaschine 1. Im dargestellten Ausführungsbeispiel visualisiert das obenseitig angeordnete Anzeigeelement 39 die Zusammensetzung der sogenannten "Überkehr" 41, wobei die linkseitige Darstellung das "Überkehrvolumen" 41a und die rechtsseitige Darstellung den "Kornanteil in der Überkehr" 41b visualisiert. Das untere, linke Anzeigeelement 39 visualisiert die sogenannten "Abscheideverluste" 42, d.h. diejenigen Kornverluste, die von der als Trennrotor 9 oder Hordenschüttler ausgeführten Trenneinrichtung 10 im rückwärtigen Bereich der landwirtschaftlichen Arbeitsmaschine 1 aus dieser ausgetragen und nicht in den Korntank 19 gefördert werden. Das untere, rechte Anzeigeelement 39 visualisiert die sogenannten "Reinigungsverluste" 43, wobei hier diejenigen Kornverluste angezeigt werden, die von der Reinigungseinrichtung 17 in analoger Weise zur Trenneinrichtung 10 aus der landwirtschaftlichen Arbeitsmaschine 1 ausgetragen und nicht in den Korntank 19 gefördert werden. Jedes der Anzeigeelemente 39 umfasst zudem einen als waagerechten Strich ausgeführten Sollwertanzeiger 44, der das maximal zulässige und vom Bediener 24 zuvor definierte Verlustniveau des jeweiligen Qualitätsparameters 40 definiert, sodass der Bediener 24 schnell erfassen kann, ob die landwirtschaftliche Arbeitsmaschine 1 eine hinreichende Arbeitsqualität aufweist.

Aufgrund der komplexen Zusammenhänge zwischen verschiedensten Maschinenparametern 38a-c und zumindest den Qualitätsparametern 40 sind die Einstelloptionen für die Trenneinrichtung 10 und die Reinigungseinrichtung 17 in sogenannten Einstellautomaten 45 hinterlegt. Im dargestellten Ausführungsbeispiel sind gemäß Figur 2 ein Abscheideautomat 46 für die Optimierung der Arbeitsweise der Trenneinrichtung 10 und ein Reinigungsautomat 47 für die Optimierung der Arbeitsweise der Reinigungseinrichtung 17 programmiert und in der Steuer- und Auswerteinrichtung 23 hinterlegt. Es liegt im Rahmen der Erfindung, dass jeder der verfügbaren Einstellautomaten 45 auch ganz oder teilweise in dem Fahrerassistenzsystem 28 hinterlegt sein kann.

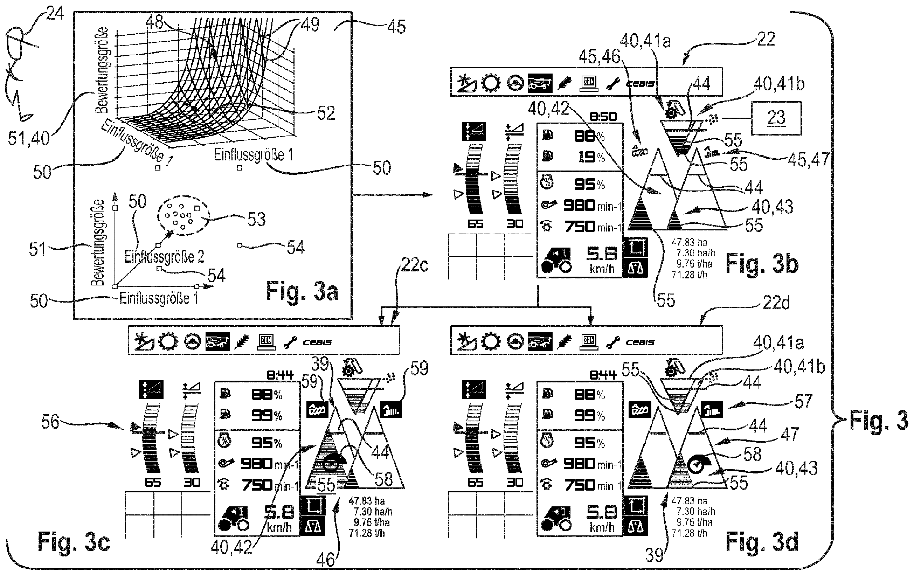

Fig. 3 beschreibt anhand schematischer Abbildungen die der Steuer- und Regeleinrichtung 23 zugeordnete Anzeigeeinheit 22 sowie die verfügbaren Einstellautomaten 45 näher. Fig. 3a zeigt zum besseren Verständnis der Wirkungsweise der verfügbaren Einstellautomaten 45 eine schematisch Struktur derselben. Sowohl der Abscheideautomat 46 als auch der Reinigungsautomat 47, wie im Übrigen jeder für die Einstellung von Arbeitsorganen 20 der landwirtschaftlichen Arbeitsmaschine 1 vorgesehene Einstellautomat 45, werden durch Kennlinienfelder 48 definiert. Die ein Kennlinienfeld 48 bildenden Kennlinien 49 beschreiben in Abhängigkeit von Einflussgrößen 50 verschiedene Bewertungsgrößen 51 der landwirtschaftlichen Arbeitsmaschine 1. Im vorliegenden Fall bildet die Bewertungsgröße 51 die zuvor beschriebenen Qualitätsparameter 40. Die Einflussgrößen 50 umfassen im dargestellten Ausführungsbeispiel zumindest die Drehzahl einer als Trennrotor 9 ausgeführten Trenneinrichtung 10 sowie die Drehzahl des der Reinigungseinrichtung 17 zugeordneten Gebläses 16 und die Öffnungsweite der Siebebenen 14, 15. Während des Arbeitseinsatzes der landwirtschaftlichen Arbeitsmaschine 1, hier der Ernteeinsatz des Mähdreschers 2, werden die ermittelten Betriebspunkte 52 unmittelbar in das Kennlinienfeld 48 übernommen. Gemäß der unteren Darstellung in Fig. 3a arbeitet die landwirtschaftliche Arbeitsmaschine 1 häufig nur in einem kleinen Bereich 53 des jeweils hinterlegten Kennlinienfeldes 48. Damit das in der Steuer- und Regeleinrichtung 23 hinterlegte Kennlinienfeld 48 den jeweils zu modellierenden Abscheide- oder Reinigungsprozess im gesamten vordefinierten Wertebereich gut wiedergibt werden in regelmäßigen Abständen Messpunkte 54 angefahren, die nicht in dem gegenwärtig durchlaufenen Bereich 53 des jeweiligen Kennlinienfeldes 48 und/oder in seinen Grenzbereichen liegen. Dies hat den Effekt, dass die in den Einstellautomaten 45 hinterlegten Abscheide- oder Reinigungsmodelle auch im Grenzbereich der Kennlinienfelder 48 und in zur Zeit nicht durchlaufenen Bereichen des jeweiligen Kennlinienfeldes 48 den jeweiligen Prozess hinreichend genau abbilden.

Wird die landwirtschaftliche Arbeitsmaschine 1, im hier dargestellten Ausführungsbeispiel der Mähdrescher 2, mit aktiviertem Abscheideautomat 46 und aktiviertem Reinigungsautomat 47 betrieben, hat die der Steuer- und Regeleinrichtung 23 zugeordnete Anzeigeeinheit 22 die in Fig. 3b gezeigte und zuvor beschriebene Struktur. Der Wert jedes Qualitätsparameters 40, hier das "Überkehrvolumen" 41a, der "Kornanteil in der Überkehr" 41b, der "Abscheideverlust" 42 und, der "Reinigungsverlust" 43, wird qualitativ in Form farblich hervorgehobener Flächen 55 visualisiert. Jede der Flächen 55 ändert ihre Ausdehnung in Abhängigkeit von den durch die Steuer- und Regeleinrichtung 23 ermittelten Werten für "Abscheideverlust" 42, "Kornverlust" 43 und "Überkehrzusammensetzung" 41a, 41b, wobei es Aufgabe der Einstellautomaten 45 ist, die Qualitätskriterien 40 in einem Optimum und unterhalb des jeweiligen Sollwertanzeigers 44 zu halten.

Muss nun ein definierter Messpunkt 54 durch die Einstellautomaten 45 angefahren werden, ergeben sich für das hier beschriebene Ausführungsbeispiel gemäß den Figuren 3c und 3d zwei Aktivierungszustände 56, 57. In dem einen Aktivierungszustand 56, Fig. 3c, fährt der Abscheideautomat 46 automatisch einen Messpunkt 54 an, der entweder außerhalb des gerade durchlaufenen Bereichs 53 oder im Grenzbereich des die Kornabscheidung an der Trenneinrichtung 10 beschreibenden Kennlinienfeldes 48 liegt. Damit der Bediener 24 der landwirtschaftlichen Arbeitsmaschine 1 darüber informiert ist, dass der Abscheideautomat 46 einen nicht im gegenwärtigen Arbeitsbereich 53 liegenden Messpunkt 54 anfährt, wird in der Anzeigeeinheit 22c die den Qualitätsparameter 40 "Abscheideverlust" 42 visualisierende Fläche 55 verblassend dargestellt. Zudem kann vorgesehen sein, dass die verblassend dargestellt Fläche 55 in ihrer Größe entweder eingefroren wird oder weiterhin die Änderung der "Abscheideverluste" 42 visualisiert. Letztere Variante hält den Bediener 24 über den Verlauf die Änderung informiert, was vor Erreichen eines eingeschwungenen Zustandes auch dazu führen kann, dass die "Abscheideverluste" 42 auch kurzzeitig die Marke des Sollwertanzeigers 44 überschreiten. Um die Optimierung eines nicht im gegenwärtigen Arbeitsbereich 53 liegenden Messpunktes 54 gut erkennbar für den Bediener 24 zu signalisieren ist erfindungsgemäß vorgesehen, dass das den "Abscheideverlust" 42 visualisierende Anzeigeelement 39 durch ein charakteristisches Symbol 58 zumindest partiell überblendet wird, während der partiell überblendete Arbeits- und/oder Qualitätsparameter 37, 40 passiv, vorzugsweise verblassend, dargestellt wird.

In analoger Weise kann die Struktur der Anzeigeeinheit 22 in dem weiteren Aktivierungszustand 57 gemäß Fig. 3d angepasst werden. In diesem Fall fährt der Reinigungsautomat 47 automatisch einen Messpunkt 54 an, der entweder außerhalb des gerade durchlaufenen Bereichs 53 oder im Grenzbereich des die Kornabscheidung an der Reinigungseinrichtung 17 beschreibenden Kennlinienfeldes 48 liegt. Damit der Bediener 24 der landwirtschaftlichen Arbeitsmaschine 1 darüber informiert ist, dass der Reinigungsautomat 47 einen nicht im gegenwärtigen Arbeitsbereich 53 liegenden Messpunkt 54 anfährt, werden in der Anzeigeeinheit 22d die die Qualitätsparameter 40 "Reinigungsverlust" 43, "Überkehrvolumen" 41a, "Kornanteil in der Überkehr" 41b, visualisierenden Flächen 55 verblassend dargestellt. Zudem kann vorgesehen sein, dass die verblassend dargestellten Flächen 55 in ihrer Größe entweder eingefroren werden oder weiterhin die Änderung der"Reinigungsverluste" 43, des "Überkehrvolumens" 41a und des "Kornanteils in der Überkehr" 41b visualisieren. Letztere Variante hält den Bediener 24 über den Verlauf die Änderungen informiert, was vor Erreichen eines eingeschwungenen Zustandes ebenfalls dazu führen kann, dass die "Reinigungsverluste" 43, das "Überkehrvolumen" 41a und der "Kornanteil in der Überkehr" 41b kurzzeitig die Marke der jeweiligen Sollwertanzeiger 44 überschreiten. Um die Optimierung eines nicht im gegenwärtigen Arbeitsbereich 53 liegenden Messpunktes 54 gut erkennbar für den Bediener 24 zu signalisieren ist auch hier erfindungsgemäß vorgesehen, dass zumindest das den "Reinigungsverlust" 43 visualisierende Anzeigeelement 39 durch ein charakteristisches Symbol 58 zumindest partiell überblendet wird, während der partiell überblendete Arbeits- und/oder Qualitätsparameter 37, 40 passiv, vorzugsweise verblassend, dargestellt wird.

In an sich bekannter Weise kann jeder der vorhandenen Einstellautomaten 45 voneinander unabhängig automatisch oder vom Bediener 24 ausgelöst aktiviert und deaktiviert werden, sodass die Anzahl der gleichzeitig arbeitenden Einstellautomaten 45 beliebig wählbar ist. Vorzugsweise sind stets alle Einstellautomaten 45 zur Optimierung der Arbeitsweise der landwirtschaftlichen Arbeitsmaschine 1 aktiviert. Es liegt im Rahmen der Erfindung, dass eine gezielte Abschaltung eines Einstellautomaten 45 auch dadurch bewirkt werden kann, dass der Bediener 24 gezielt einen Arbeitsparameter 37 durch Eingabe eines definierten Wertes ändert. Findet die Übersteuerung durch den Bediener 24 während des gezielten Anfahrens von Messpunkten 54 statt, werden die charakteristischen Symbole 58 ausgeblendet und die gegebenenfalls verblassende Darstellung der Arbeits- und/oder Qualitätsparameter 37, 40 aufgehoben. In diesem Zusammenhang kann zudem vorgesehen sein, das der Bediener 24 in der Anzeigeeinheit 22 einen expliziten Hinweis auf die Deaktivierung von Einstellautomaten 45 erhält.

Da die Steuer- und Regeleinrichtung 23 in an sich bekannter Weise so beschaffen ist, dass sie stets die Änderung der Qualitätsparameter 40 visualisiert, unabhängig davon, ob Einstellautomaten 45 aktiviert sind oder nicht kann in einer weiteren Ausgestaltung der Erfindung vorgesehen sein, dass in der Anzeigeeinheit 22 die Einstellautomaten 45 repräsentierende Piktogramme 59 positioniert sind, die bei aktivem Einstellautomat 45 zumindest farblich hervorgehoben visualisiert werden. Die Deaktivierung des jeweiligen Einstellautomaten 45 wird entsprechend durch Abblendung des jeweiligen Piktogramms 59 visualisiert.

Weiter liegt es im Rahmen der Erfindung, dass jeder Einstellautomat 45 über sein eigenes Kennlinienfeld 48 verfügt, wobei einzelne Einstellautomaten 45, auch unter Einbeziehung einer Vielzahl von Kennlinienfeldern 48 eine Optimierung der Arbeitsweise der landwirtschaftlichen Arbeitsmaschine 1 bewirken können. Im dargestellten Ausführungsbeispiel berücksichtigt der Reinigungsautomat 47 Kennlinienfelder 48, die sowohl die "Reinigunsgverluste" 43 als auch das "Überkehrvolumen" 41a und den "Kornanteil in der Überkehr" 41b berücksichtigen. Damit die berücksichtigten Kennlinienfelder 48 auch bei schwankenden Einflussgrößen 50 brauchbare Werte für die Bewertungsgrößen 51 und damit für eine optimale Arbeitsweise der landwirtschaftlichen Arbeitsmaschine 1 liefern, ist vorgesehen, dass das Anfahren nicht im gegenwärtigen Arbeitsbereich 53 oder in den Grenzbereichen der Kennlinienfelder 48 liegender Messpunkte 54 in definierten zeitlichen Abständen und auf eine bestimmte Anzahl von Messpunkten 54 beschränkt erfolgt. Vorzugsweise ist die Anzahl der gezielt ansteuerbaren Messpunkte 54 auf vier beschränkt. Die definierten Zeitintervalle, innerhalb derer die verschiedenen Messpunkte 54 wiederholt angesteuert werden, sind so beschaffen, dass die Dauer des Zeitintervalls mit zunehmender Einsatzzeit der landwirtschaftlichen Arbeitsmaschine 1 zunimmt und vorzugsweise zu Beginn der Einsatzzeit kleiner als 15 Minuten ist und sich mit zunehmender Einsatzzeit auf 30 Minuten erhöht. Zudem kann vorgesehen sein, dass die Steuer- und Regeleinrichtung 23 und damit auch die Einstellautomaten 45 automatisch mit Inbetriebnahme der landwirtschaftlichen Arbeitsmaschine 1 aktiviert werden. In diesem Zusammenhang kann zudem vorgesehen sein, dass bei inaktiven Einstellautomaten 45 ein Hinweis auf eine Effizienzsteigerung durch Aktivierung des jeweiligen Einstellautomaten 45 an den Bediener 24 generierbar ist.

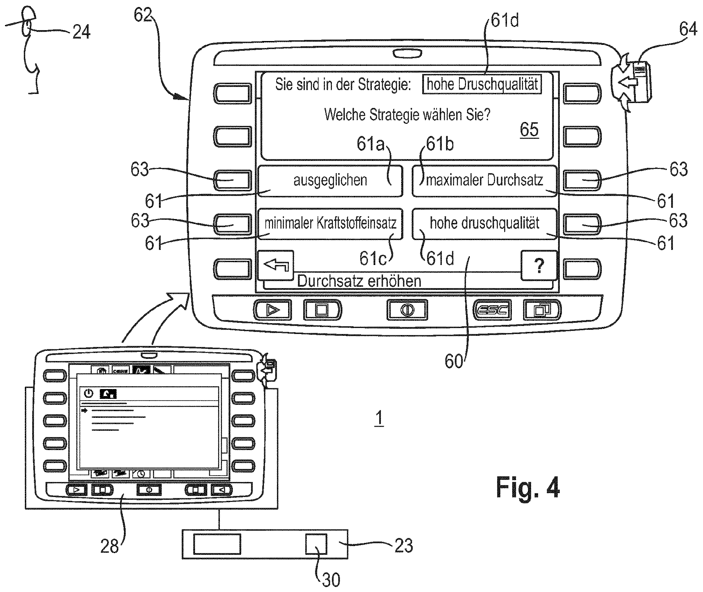

Figur 4 zeigt eine Detailansicht des erfindungsgemäßen Fahrerassistenzsystems 28. In dem dem Fahrerassistenzsystem 28 zugeordneten Display 60 sind zunächst die verfügbaren Prozessführungsstrategien 61 visualisiert. Im dargestellten Ausführungsbeispiel sind beispielhaft vier Prozessführungsstrategien 61 auswählbar, nämlich "ausgeglichen" 61 a; "maximaler Durchsatz" 61 b; "minimaler Kraftstoffeinsatz" 61c und "hohe Druschqualität" 61d.

Wird die Prozessführungsstrategie "maximaler Durchsatz" 61b gewählt, regelt das Fahrerassistenzsystem 28 die Arbeitsweise der landwirtschaftlichen Arbeitsmaschine 1 so, dass der maximal mögliche Durchsatz, bei dem gerade noch die vordefinierten Sollwerte für einen zulässigen Kornverlust, bestehend aus Abscheideverlust 42 und Reinigungsverlust 43, eingehalten werden. Wird die Prozessführungsstrategie "minimaler Kraftstoffeinsatz" 61c gewählt, regelt das Fahrerassistenzsystem 28 die Arbeitsweise der landwirtschaftlichen Arbeitsmaschine 1 so, dass der Antriebsenergiebedarf sinkt. Vorzugsweise wird dies dadurch erreicht, dass die Drehzahl eines oder mehrere Arbeitsorgane 20 reduziert wird. Arbeitet das Fahrerassistenzsystem 28 in der Prozessführungsstrategie "hohe Druschqualität" 61b wird neben niedrigen Kornverlusten ein geringer Körnerbruch und ein niedriger Beimengungsanteil im geernteten Korn angestrebt. Die Regelstrategie "ausgeglichen" 61a berücksichtig für alle optimierbaren Arbeits- und/oder Qualitätsparameter 37, 40 mittlere Niveaus, sodass sich insgesamt eine ausgewogene Arbeitsweise der landwirtschaftlichen Arbeitsmaschine 1 ergibt, ohne dass bestimmten Arbeits- und Qualitätsparametern 37, 40 eine Priorität zukommt.

Jede der Prozessführungsstrategien 61 ist je nach Beschaffenheit des das Fahrerassistenzsystem 28 und das Display 60 aufnehmenden Gehäuses 62 entweder via Touchscreen-Funktion auswählbar, wenn das Display 60 als Touchscreen-Monitor ausgebildet ist, oder über eine der jeweiligen Prozessführungsstrategie 61 zugeordnete Taste 63 aktivierbar. Es liegt im Rahmen der Erfindung, dass die Aktivierung der jeweiligen Prozessführungsstrategie 61 auch mittels eines Dreh-Drück-Schalters 64 bewirkbar ist. Im oberen Bereich des Displays 60 ist zudem ein Sichtfenster 65 positioniert, welches natürlichsprachige Kommentare umfasst und in Figur 4 einen Hinweis auf die gegenwärtig aktivierte Prozessführungsstrategie 61 gibt.

Gemäß den vorherigen Ausführungen ist das Fahrerassistenzsystem 28 mit der der landwirtschaftlichen Arbeitsmaschine 1 zugeordneten Steuer- und Regeleinrichtung 23 gekoppelt, wobei es auch denkbar ist, dass das Fahrerassistenzsystem 28 und die Steuer- und Regeleinrichtung 23 in nicht dargestellter Weise in einer einzigen Baueinheit zusammengefasst sind. Nachdem eine erste Prozessführungsstrategie 61 durch den Bediener 24 ausgewählt wurde werden die verschiedenen Arbeits- und Qualitätsparameter 37, 40 in der bereits beschriebenen Weise anhand der hinterlegten von Kennlinien 49 definierten Kennlinienfelder 48 optimiert. Ermittelt die der Steuer- und Regeleinrichtung 23 zugeordnete Recheneinheit 30, dass innerhalb einer gewählten Prozessführungsstrategie 61 definierte Grenzwerte für einen oder mehrere der Qualitätsparameter 40 nicht einhaltbar sind oder noch niedriger als vorgegeben sein könnten, schlägt das Fahrerassistenzsystem 28 erfindungsgemäß einen Wechsel der Prozessführungsstrategie 61 vor.

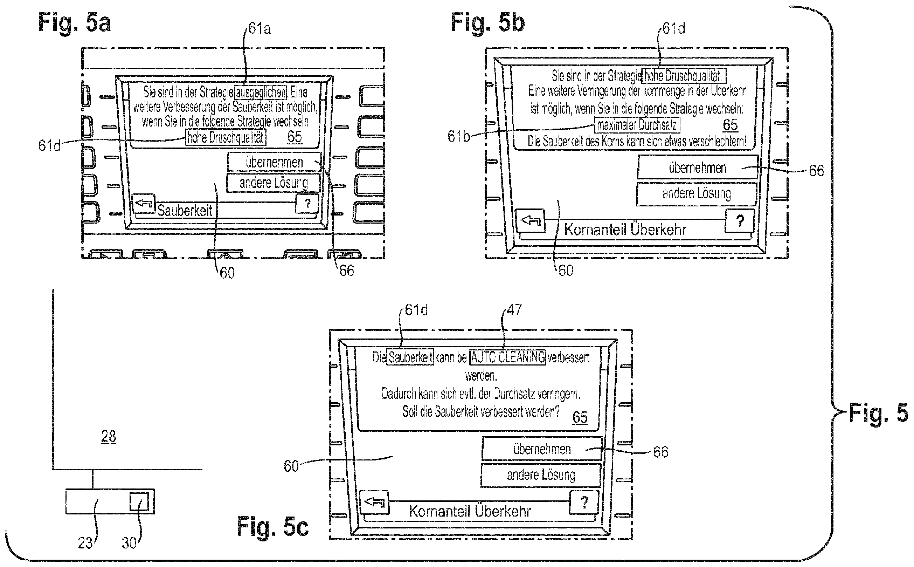

Figur 5 zeigt verschiedene Szenarien für einen Vorschlag zum Wechsel der Prozessführungsstrategie 61. In Figur 5a schlägt das Fahrerassistenzsystem 28 in dem seinem Display 60 zugeordneten Sichtfenster 65 in natürlichsprachiger Form vor, von der Prozessführungsstrategie "ausgeglichen" 61a in die Prozessführungsstrategie "hohe Druschqualität" 61d zu wechseln, um eine Verbesserung der Kornsauberkeit zu bewirken. In analoger Weise ist in Figur 5b dargestellt, wie das Fahrerassistenzsystem 28 einen Wechsel von der Prozessführungsstrategie "hohe Druschqualität" 61d in die Prozessführungsstrategie "maximaler Durchsatz" 61b in natürlichsprachiger Weise vorschlägt, um eine Verringerung der Kornmenge in der sogenannten Überkehr zu bewirken. Dieser Dialog ist wiederum in dem dem Display 60 zugeordneten Sichtfenster 65 visualisiert. Figur 5c zeigt schließlich einen Dialog, bei dem das Fahrerassistenzsystem 28 die Aktivierung des Reinigungsautomaten 47 vorschlägt, wobei der Reinigungsautomat 47 Bestandteil der Prozessführungsstrategie "hohe Druschqualität" 61d ist. Erfindungsgemäß schlägt das Fahrerassistenzsystem 28 einen Wechsel der Prozessführungsstrategie 61 dann vor, wenn die vorgegebenen Sollwerte eines oder mehrerer Qualitätsparameter 40 innerhalb der gewählten Prozessführungsstrategie 61 nicht erreichbar sind oder wenn das Fahrerassistenzsystem 28 erkennt, dass bei Wahl einer anderen Prozessführungsstrategie 61 noch günstigere Werte für einen oder mehrere der Qualitätsparameter 40 erreichbar sind.

Will der Bediener 24 der landwirtschaftlichen Arbeitsmaschine 1 den vom Fahrerassistenzsystem 28 vorgeschlagenen Wechsel der Prozessführungsstrategie 61 akzeptieren bestätigt er dies durch Aktivierung eines "Übernehmen"-Feldes 66. Der dadurch aktivierte Optimierungsprozess basiert auf einer Interaktion des Bedieners 24 mit dem Fahrerassistenzsystem 28. Während des Optimierungsprozesses werden dem Bediener 24 in der Anzeigeeinheit 22 der Steuer- und Regeleinrichtung 23 gemäß den Erläuterungen zu den Figuren 2 und 3 die durch das Fahrerassistenzsystem 28 bewirkten Änderungen der Arbeitsparameter 37 sowie deren Auswirkung auf die jeweiligen Qualitätsparameter 40 angezeigt. Das Fahrerassistenzsystem 28 ist dabei so beschaffen, dass der Bediener 24 die Optimierungsresultate bewerten muss. In Abhängigkeit von der Bewertung durch den Bediener wird der Optimierungsprozess fortgeführt oder beendet. Der Bediener 24 wird über die aus einem Prozessführungsstrategiewechsel resultierenden Auswirkungen auf die Arbeitsweise hingewiesen, indem in dem jeweiligen Sichtfenster 65 ergänzende natürlichsprachige Kommentare, etwa zum Einfluss auf bestimmte Qualitätsparameter 40, eingeblendet werden. Ergänzend lässt sich eine Beschreibung der vorgeschlagenen Prozessführungsstrategie 61 manuell abrufen und anzeigen oder automatisch einblenden, um dem Bediener 24 die Möglichkeit zu geben, die aktuell gewählte mit der vorgeschlagenen Prozessführungsstrategie 61 vergleichen zu können.

Ein weiterer Aspekt der Auswertung der Interaktion des Bedieners 24 mit dem Fahrerassistenzsystem 28 ist das Registrieren einer wiederholten Interaktion, die das selbe Optimierungsziel betrifft. Diese Feststellung wird herangezogen, um innerhalb des Optimierungsprozesses dieses Optimierungsziel stärker zu gewichten, sodass eine wiederholte Interaktion des Bedieners 24 mit dem Fahrerassistenzsystem 28 zur Optimierung desselben Arbeits- und/oder Qualitätsparameters 37, 40 das Fahrerassistenzsystem 28 veranlasst, einen Wechsel der Prozessführungsstrategie 61 vorzuschlagen.
- 60: Display
- 61: Prozessführungsstrategie
- 62: Gehäuse
- 63: Taste
- 64: Dreh-Drück-Schalter
- 65: Sichtfenster
- 66: "Übernehmen"-Feld

## Patentansprüche

1. Fahrerassistenzsystem für eine landwirtschaftliche Arbeitsmaschine mit zumindest einer Steuer- und Regeleinrichtung, die mittels in ihr hinterlegter Kennlinienfelder zu einer automatisierbaren Einstellung und Überwachung von Arbeits- und/oder Qualitätsparametern der landwirtschaftlichen Arbeitsmaschine eingerichtet ist und das durch Vorgabe einer von einem Bediener (24) auswählbaren Prozessführungsstrategie eine automatisierte Überwachung und/oder Einstellung zumindest eines Arbeits- und/oder Qualitätsparameters der landwirtschaftlichen Arbeitsmaschine erfolgt, **dadurch gekennzeichnet, dass** das Fahrerassistenzsystem (28) derart ausgestaltet ist, einen Wechsel der Prozessführungsstrategie (61) vorzuschlagen, wenn der vorgegebene Sollwert eines oder mehrerer Qualitätsparameter (40) innerhalb der von einem Bediener (24) vorausgewählten Prozessführungsstrategie (61) nicht erreichbar ist und wobei jeder Prozessführungsstrategie (61) mehrere Qualitätsparameter (40) und mehrere Arbeitsparameter (37) zugeordnet sind, wobei das Fahrerassistenzsystem (28) zudem derart ausgestaltet ist, einen Wechsel der Prozessführungsstrategie (61) vorzuschlagen, wenn definierte Grenzwerte für einen oder mehrere der Qualitätsparameter (40) noch niedriger als vorgegeben sein können.

2. Fahrerassistenzsystem nach Anspruch 1, **dadurch gekennzeichnet, dass** eine wiederholte Interaktion des Bedieners (24) mit dem Fahrerassistenzsystem (28) zur Optimierung desselben Arbeits- und/oder Qualitätsparameters (37, 40) das Fahrerassistenzsystem (28) veranlasst, einen Wechsel der Prozessführungsstrategie (61) vorzuschlagen.

3. Fahrerassistenzsystem nach einem der vorhergehenden Ansprüche, **dadurch gekennzeichnet, dass** die Kommunikation des Bedieners (24) mit dem Fahrerassistenzsystem (28) natürlichsprachig erfolgt.

4. Fahrerassistenzsystem nach einem der vorhergehenden Ansprüche, **dadurch gekennzeichnet, dass** die auswählbaren Prozessführungsstrategien (61) zumindest die Prozessführungsstrategien "maximaler Durchsatz" (61b), "minimaler Kraftstoffeinsatz" (61c), "hohe Druschqualität" (61d) und "Ausgeglichen" (61a) umfassen, wobei die Prozessführungsstrategie "Ausgeglichen" (61a) für alle optimierbaren Arbeits- und/oder Qualitätsparameter (37, 40) mittlere Niveaus berücksichtigt, sodass sich insgesamt eine ausgewogene Arbeitsweise der landwirtschaftlichen Arbeitsmaschine (1) ergibt, ohne dass bestimmte Arbeits- und Qualitätsparametern (37, 40) eine Priorität zukommt.

5. Fahrerassistenzsystem nach einem der vorhergehenden Ansprüche, **dadurch gekennzeichnet, dass** aus einem Wechsel der Prozessführungsstrategie (61) resultierende Auswirkungen auf die Arbeitsweise der landwirtschaftlichen Arbeitsmaschine (1) im Display (60) des Fahrerassistenzsystems (28) natürlichsprachig eingeblendet werden.

6. Fahrerassistenzsystem nach einem der vorhergehenden Ansprüche, **dadurch gekennzeichnet, dass** eine Beschreibung der vorgeschlagenen Prozessführungsstrategie (61) im Display (60) des Fahrerassistenzsystems (28) natürlichsprachig darstellbar ist.

7. Fahrerassistenzsystem nach einem der vorhergehenden Ansprüche, **dadurch gekennzeichnet, dass** die Arbeitsparameter (37) Maschinenparametereinstellungen (38b) und Erntegutparameter umfassen können.

8. Fahrerassistenzsystem nach einem der vorhergehenden Ansprüche, **dadurch gekennzeichnet, dass** die Qualitätsparameter (40) die Parameter "Abscheideverlust" (42),"Reinigungsverlust" (43), "Überkehr" (41), "Überkehrvolumen" (41a) und "Kornanteil in der Überkehr" (41b) umfassen.

9. Fahrerassistenzsystem nach einem der vorhergehenden Ansprüche, **dadurch gekennzeichnet, dass** zumindest die die Qualitätskriterien (40) beschreibenden Kennlinienfelder (48) in Einstellautomaten (45) hinterlegt sind und wobei jeder Einstellautomat (48) in der Anzeigeeinheit (22) mittels Piktogramm (59) visualisiert ist und die Aktivierung eines Einstellautomaten (45) durch Hervorhebung des jeweiligen Piktogramms (59) und die Deaktivierung des jeweiligen Einstellautomaten (45) durch Abblendung des jeweiligen Piktogramms (59) visualisiert wird.

10. Fahrerassistanzsystem nach einem der vorhergehenden Ansprüche, **dadurch gekennzeichnet, dass** die Steuer- und Regeleinrichtung (23) automatisch mit der Inbetriebnahme der Arbeitsmaschine (1) aktivierbar ist.

## Claims

1. Driver assist system for an agricultural working machine comprising at least one open-loop and closed-loop control device which is adapted by means of families of characteristics stored therein for automatable adjustment and monitoring of working and/or quality parameters of the agricultural working machine and which by predetermining a process implementation strategy selectable by an operator (24) effects automated monitoring and/or adjustment of at least one working and/or quality parameter of the agricultural working machine, **characterized in that** the driver assist system (28) is so configured as to propose a change in the process implementation strategy (61) when the predetermined target value of one or more quality parameters (40) cannot be reached within the process implementation strategy (61) preselected by an operator (24) and wherein each process implementation strategy (61) is allocated several quality parameters (40) and several working parameters (37), wherein the driver assist system (28) is additionally so configured as to propose a change in the process implementation strategy (61) when defined limit values for one or more of the quality parameters (40) can be even lower than predetermined.

2. Driver assist system according to claim 1, **characterized in that** a repeated interaction of the operator (24) with the driver assist system (28) for optimization of the same working and/or quality parameter (37, 40) causes the driver assist system (28) to propose a change in the process implementation strategy (61).

3. Driver assist system according to one of the preceding claims, **characterized in that** the communication of the operator (24) with the driver assist system (28) is effected in natural language.

4. Driver assist system according to one of the preceding claims, **characterized in that** the selectable process implementation strategies (61) include at least the process implementation strategies 'maximum throughput' (61b), 'minimum fuel consumption' (61c), 'high threshing quality' (61d) and 'balanced' (61a), wherein the process implementation strategy 'balanced' (61a) takes account of average levels for all optimizable working and/or quality parameters (37, 40) so that overall a balanced mode of operation of the agricultural working machine (1) is effected without a priority being assigned to given working and quality parameters (37, 40).

5. Driver assist system according to one of the preceding claims, **characterized in that** effects resulting from a change in the process implementation strategy (61) on the mode of operation of the agricultural working machine (1) are merged in natural language in the display (60) of the driver assist system (28).

6. Driver assist system according to one of the preceding claims, **characterized in that** a description of the proposed process implementation strategy (61) can be represented in natural language in the display (60) of the driver assist system (28).

7. Driver assist system according to one of the preceding claims, **characterized in that** the working parameters (37) can include machine parameter settings (38b) and crop material parameters.

8. Driver assist system according to one of the preceding claims, **characterized in that** the quality parameters (40) include the parameters 'separation loss' (42), 'cleaning loss' (43), 'tailings' (41), 'tailings volume' (41a) and 'grain proportion in the tailings' (41b).

9. Driver assist system according to one of the preceding claims, **characterized in that** at least the families of characteristics (48) describing the quality criteria (40) are stored in automatic adjustment means (45), and wherein each automatic adjustment means (48) is visualized in the display unit (22) by means of an icon (59) and activation of an automatic adjustment means (45) is visualized by emphasizing the respective icon (59) and de-activation of the respective automatic adjustment means (45) is visualized by dimming the respective icon (59).

10. Driver assist system according to one of the preceding claims, **characterized in that** the open-loop and closed-loop control device (23) can be activated automatically with start-up of the working machine (1).

## Revendications

1. Système d'assistance à la conduite pour une machine de travail agricole, comprenant au moins un équipement de commande et de régulation qui, au moyen de réseaux de courbes caractéristiques enregistrés dans celui-ci, est agencé en vue d'un réglage et d'une surveillance automatisables de paramètres de travail et/ou de qualité de la machine de travail agricole et qui, par prescription d'une stratégie de conduite de processus sélectionnable par un utilisateur (24), effectue une surveillance et/ou un réglage automatisés d'au moins un paramètre de travail et/ou de qualité de la machine de travail agricole, **caractérisé en ce que** le système d'assistance à la conduite (28) est conçu de façon à proposer un changement de stratégie de conduite de processus (61) si la valeur de consigne prescrite d'un ou plusieurs paramètres de qualité (40) à l'intérieur de la stratégie de conduite de processus (61) présélectionnée par un utilisateur (24) n'est pas atteignable, et à chaque stratégie de conduite de processus (61) étant associés plusieurs paramètres de qualité (40) et plusieurs paramètres de travail (37), le système d'assistance à la conduite (28) étant également conçu pour proposer un changement de stratégie de conduite de processus (61) si des valeurs limites définies pour un ou plusieurs des paramètres de qualité (40) peuvent être encore inférieures à celles prescrites.

2. Système d'assistance à la conduite selon une des revendications précédentes, **caractérisé en ce qu'**une interaction répétée de l'utilisateur (24) avec le système d'assistance à la conduite (28) pour optimiser le paramètre de travail et/ou de qualité (37, 40) de celui-ci amène le système d'assistance à la conduite (28) à proposer un changement de la stratégie de conduite de processus (61).

3. Système d'assistance à la conduite selon une des revendications précédentes, **caractérisé en ce que** la communication de l'utilisateur (24) avec le système d'assistance à la conduite (28) s'effectue en langage naturel.

4. Système d'assistance à la conduite selon une des revendications précédentes, **caractérisé en ce que** les stratégies de conduite de processus sélectionnables (61) incluent au moins les stratégies de conduite de processus « débit maximal » (61b), « consommation de carburant minimale » (61c), « qualité de battage haute » (61d) et « équilibré » (61a), la stratégie de conduite de processus « équilibré » (61a) prenant en compte des niveaux moyens pour tous les paramètres de travail et/ou de qualité optimisables (37, 40), ce qui produit globalement un mode de travail équilibré de la machine de travail agricole (1) sans qu'une priorité ne soit accordée à certains paramètres de travail et de qualité (37, 40).

5. Système d'assistance à la conduite selon une des revendications précédentes, **caractérisé en ce que** des effets sur le mode de travail de la machine de travail agricole (1) résultant d'un changement de la stratégie de conduite de processus (61) sont affichés en langage naturel sur le moyen de visualisation (60) du système d'assistance à la conduite (28).

6. Système d'assistance à la conduite selon une des revendications précédentes, **caractérisé en ce qu'**une description de la stratégie de conduite de processus proposée (61) est représentable en langage naturel sur le moyen de visualisation (60) du système d'assistance à la conduite (28).

7. Système d'assistance à la conduite selon une des revendications précédentes, **caractérisé en ce que** les paramètres de travail (37) peuvent inclure des réglages de paramètres machine (38b) et des paramètres de produit de récolte.

8. Système d'assistance à la conduite selon une des revendications précédentes, **caractérisé en ce que** les paramètres de qualité (40) incluent les paramètres « perte à la séparation » (42), « perte au nettoyage » (43), « retour des ôtons » (41), « volume du retour des ôtons » (41a) et « proportion de grain dans le retour des ôtons » (41b).

9. Système d'assistance à la conduite selon une des revendications précédentes, **caractérisé en ce qu'**au moins les réseaux de courbes caractéristiques (48) décrivant les critères de qualité (40) sont enregistrés dans des automates de réglage (45), chaque automate de réglage (48) étant visualisé sur l'unité d'affichage (22) au moyen d'un pictogramme (59), et l'activation d'un automate de réglage (45) étant visualisée par la mise en évidence du pictogramme (59) respectif, et la désactivation de l'automate de réglage (45) respectif étant visualisée par l'atténuation du pictogramme (59) respectif.

10. Système d'assistance à la conduite selon une des revendications précédentes, **caractérisé en ce que** l'équipement de commande et de régulation (23) est activable automatiquement avec la mise en marche de la machine de travail (1).
